# EUROPEAN PATENT SPECIFICATION

(11) **EP 2 224 378 B1**
(45) Date of publication and mention of the grant of the patent: **01.08.2012**
(21) Application number: 09153620.1
(22) Date of filing: 25.02.2009
(51) Int. Cl.: G06K 19/07

(54) **Method for switching an RFID tag from deep sleep to active mode**
Verfahren zum Schalten eines RFID-Etiketts vom Ruhemodus in den aktiven Modus
Procédé de commutation d'une étiquette RFID d'un mode de sommeil profond vers un mode actif

(43) Date of publication of application: 01.09.2010
(73) Proprietor: Ingecom Sàrl, 2520 La Neuveville (CH)
(72) Inventor: Desjeux, Oliver, 2525 Le Landeron (CH)
(74) Representative: Kley, Hansjörg

(56) References cited:
- WO-A-2007/101080
- WO-A-2008/104567
- US-A1- 2003 104 848
- US-A1- 2005 093 374
- US-A1- 2005 150 949
- US-A1- 2006 113 377

## Description

The present invention relates to
- a method for switching an RFID tag from a deep sleep mode to active mode and
- to a corresponding active RFID tag.

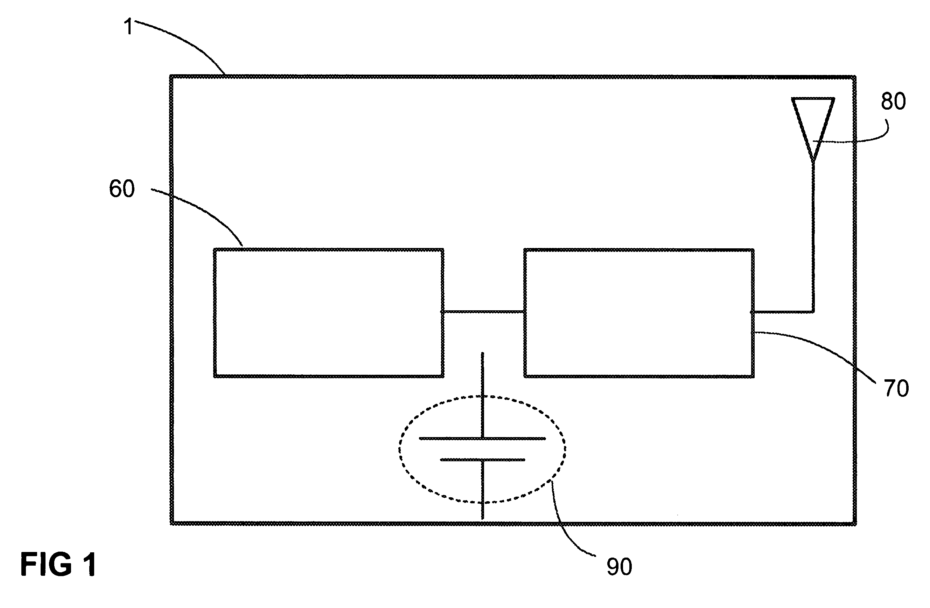

An RFID active tag 1 is an electronic device with at least an antenna 80, a battery 90, a transmitter unit 70 (or also denoted by transceiver unit 70) and a state machine or microcontroller unit 60 as principally depicted in Fig. 1. In its most common format, the transmitter 70 is transmitting telegrams on the RF frequency (RF = radio frequency) at predetermined intervals, therefore switches regularly form transmit to sleep mode. Many implementations are already on the market from companies such as SAVI, Wavetrend, Coronis, Identec, Ingecom, or other ones. This state of the art product has already several differentiations in the way the telegram is broadcasted, whether it is transmitted on a regular or random interval, whether if it can be kept in silent state or not.

The tags already on the market operate in a «propagating mode» with coupled E/H-field, e.g. at frequencies compatible with this mode of operation, like typically above 300MHz, called RF in this current document. This mode of transmission allows for long reading distances, with tags that are not necessarily organized as facing the interrogator, like is the case for passive tags operating with magnetic coupling between interrogator and tag.

For the sake of clarity only the terms
«transmit state»
«silent state»
«active mode» and «deep sleep mode»
with the before mentioned definitions are consistently used in the following text. The «transmit state» and the «silent state» are considered as part of the «active mode».

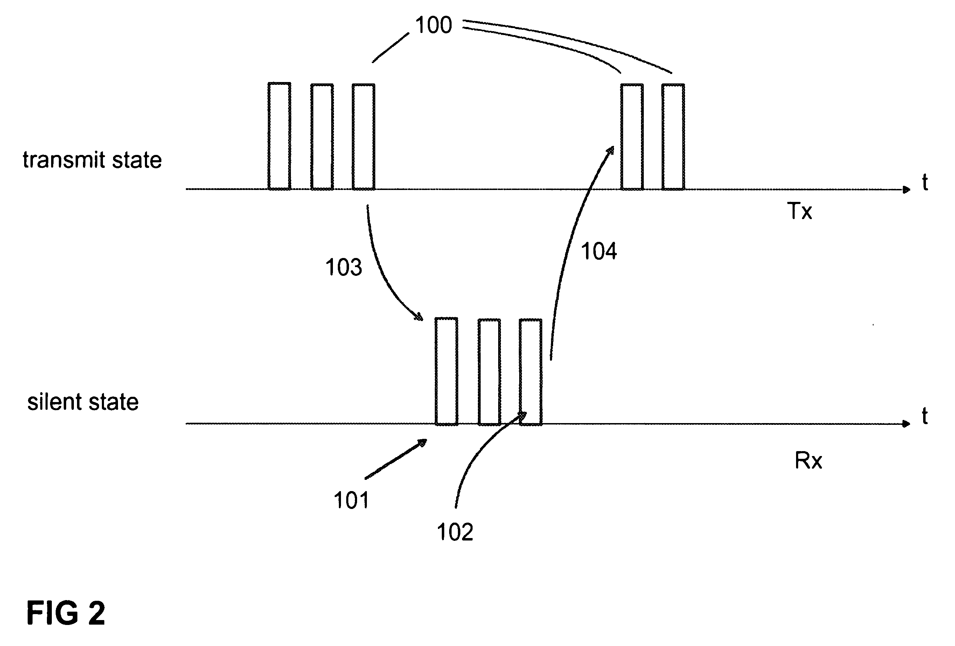

The basic principle of the active tag, and the way it can be operating for several years without draining the battery, is by keeping a so called «silent state» between the RF transmissions. The «silent state» is done by keeping the state machine in a very low power consumption mode, typically below 0,5µA in the case of the Ingecom active tags; http://www.ingecom.ch . In this silent state, the active tag is not transmitting its telegrams. The state machine remains in operation with a low-power counter used to determine the next transmission time. Depending on the implementation, some listen windows may be activated to check for a potential incoming telegram from the reader, see Fig. 2.

On the other hand a «transmit state» or an «active mode» or a «beaconing state» or a «propagating mode» or an «operating mode» denotes the opposite of the «silent state». In the «silent state» the tag is not transmitting, but may be listening periodically to verify if any incoming telegram should be interpreted. The «deep sleep mode» is a mode in which all the activity of the state machine is not activated, not even a timer, not even a listening window. The tag can get out of this «silent mode» mode by an external solicitation. A typical current consumption in «silent mode» is in the range of 200nA for polarization for the Ingecom active tags.

The «silent state» of the active tag is basically a state in which the tag is not transmitting its telegram 100 by the transmitting section Tx. However, an active tag must periodically wake up - see sequence 101 in Fig. 2 - its receiving section Rx in order to make sure that the reader is not sending any command that would result, presumably, in switching from the «silent state» to the «transmit state» 104. Fig. 2 describes a typical RF sequence, under supervision of the reader, which changes the state of operation 103, 104 of the tag 1.

Unfortunately, the periodic wake-up 101 of the receiving section Rx of the active tag 1 generates a very significant contribution to the overall energy consumption of the active tag 1. The receiving section Rx of a typical RF transceiver is sinking approximately the same order of magnitude of energy as what is required to transmit telegrams, see sequence 100 in Fig. 2. So, placing the tag 1 in a silent state is generally not providing any benefit to the overall lifetime of the battery 90 of the active tag 1, despite what would be expected by the users.

The current document addresses the specific requirement of placing the active tag 1 in a «deep sleep mode» as explained above. This feature is particularly useful especially during the production in order to be able to test individually the RF characteristics of all the tags without having the other tags corrupting the production measurement. It is equally important to keep the tags free from transmission during the whole logistic process, especially during the air transport period.

The «deep sleep mode» is a mode in which all the activity of the state machine is de-activated, not even a timer nor a listening window are in use. The tag can get out of this «deep sleep mode» only by an external solicitation. A typical current consumption in «deep sleep mode» is in the range of 200nA, in the case of the Ingecom active tags.

US 7,446,658 B2 discloses a tag comprising a motion sensor in order for a switch from active mode to a deep sleep mode. This solution is limited for a specific use and not in general applicable, since during a transport phase these tags may inadvertently be activated/deactivated randomly.

The documents US 2003/104848 A1 [6] and US 2005/150949 A1 [7] disclose a RFID tag respectively a display tag in which a incoming wake-up signal is decoded and analyzed, whether this signal is intended for that tag. This solution requires components as a reference and a comparator respectively a digital logic.

The method according to WO 2007/101080 A2 [8] comprises a wake-up Solution by allowing all non-addressed transponders to remain in a sleep state.

The document US 2005/0093374 A1 [9] provides for a passive tag a solution for connecting a power source to a circuit in response to an externally applied magnetic field.

The electronic payment card according to WO 2008/104567 A1 [10] comprises a sensor , e.g, a piezo element, responsive to a deformation of that card. By this sensor responsive to a bending a processor on said card is brought out of a sleep mode.

It is therefore a task of the present invention, to overcome the drawbacks of the known solutions for switching a RFID tag from a deep sleep mode to an active mode, and to make sure that a method is available to wake-up the tag from this deep sleep mode without adding any significant cost to the product, and without necessity to open the case.

This task is achieved by a method and an RFID tag according to the features given in claim 1 resp. claim 7.

The solution described here is based on an energy detector responsive to an external trigger or energy transfer. The energy detector isin the form of a capacitive coupler. Upon reception of the triggering signal, a simple carrier, the tag will open a listen window on the RF channel. During this listening time, the tag shall receive the instruction, from it's reader, to change mode. It will then switch to the regular active mode. The advantages of the invention are now briefly discussed:

i) The first advantage of this method is that the tag doesn't have any mechanical contact to the outside world, therefore the case can be permanently closed and waterproof tested.

ii) The second advantage is to keep the energy consumption very low. The tag is in the «deep sleep mode», and doesn't require more than 200nA of current until it is solicited by the 13.56MHz carrier or by a capacitive energy transfer. Upon solicitation, the tag listens on the RF channel during a very brief time frame, typically 200 micro-seconds, and interprets an incoming message if there is one. In case no message is inbound, the tag returns to the deep sleep mode. Only very little energy is used for this operation in case of false triggering by the 13.56MHz triggering signal.

iii) The third advantage is that any configuration command can also be sent during this listen window, hence allowing the tag to wake-up in different configurations of transmissions and/or reception.

iv The fourth advantage is that the tag remains silent, therefore un-noticed, on the RF channel upon triggering.

The invention also solves the problem of air-transporting the tags, during which the IATA requires that no intentional radiator may be used. Another usage is for the storage of the tags in the warehouse in the deep sleep mode, without having an impact on the battery lifetime of the tag. So the storage of the tag can be done, allowing for significant production batches to be produced, still ensuring that the end-user shall receive tags with a fresh new battery with a quick wake-up before shipment. This specific telegram requires having a hardware implementation with additional components as compared to a simple peak detector as described herein, hence, would require to increase the individual active tag's production price, which is not desirable.

A more elaborated concept is found in US 6,765,484 B2 [1] and patent application WO2007/101080 A2 [3], where the LF receiver is able to decode the telegrams sent by the LF transmitter. The benefit of having only a detector in the method according to the invention is that the overall implementation cost is dramatically reduced. The LF detector is considered only as a simple switch.

The principle of waking up a tag is not new. In EP 1 210 693 B1 [5] there is also a method disclosed, by which an electronic ticket - also to be considered as a tag - receives a wake-up telegram on a frequency of 13.5MHz, but this is more than just a transfer of energy. This telegram contains specific information regarding the subsequent bidirectional communication on a higher frequency. The invention here uses the wake up telegram without any information just to open a receiving windows. This represents a significant simplification. This solution was for EP 1 210 693 B1 since a plurality of tags had to be traced.

The working principle of the invention will now be described more in detail with reference to the accompanying drawings wherein:

Figure 1
Typical Active tag structure according to the state of the art;

Figure 2;
Typical Active Tag sequence from a transmit state to silent state, and back according to the state of the art;

Figure 3
Active tag with a LF field detector for waking up;

Figure 4
Active tag with two plates for a capacitive coupling for waking up according to an embodiment of the invention;

Figure 5
State/event diagram for toggling from active mode to deep sleep mode with a LF field detector;

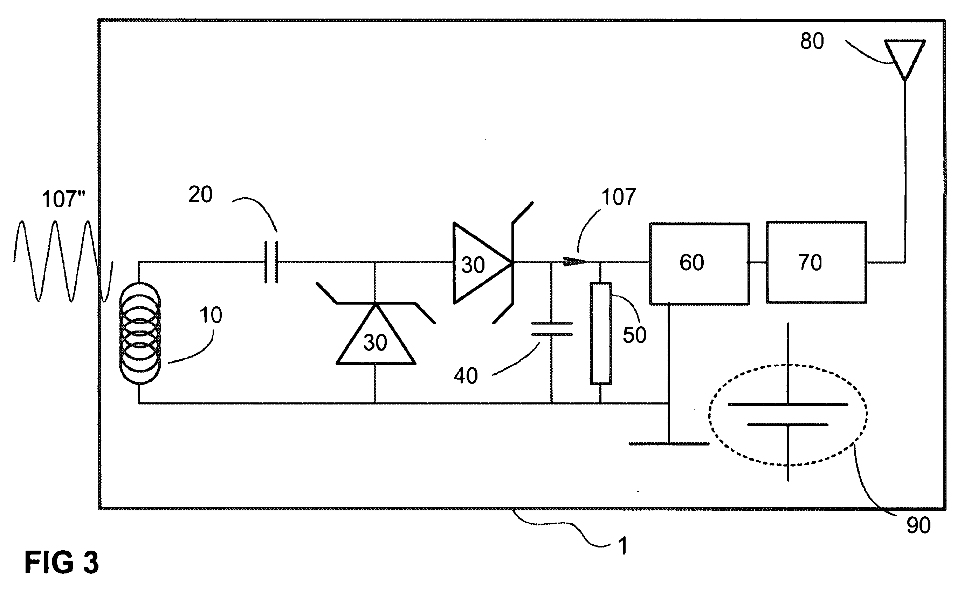

The principle is explained in the arrangement according to Fig. 3. The active tag 1 is fitted with a simple low-frequency detector formed by a coil 10, a peak-detector formed by a capacitor 20 and two Schottky diodes 30. A further capacitor 40 is loaded with a resistor 50, details see Fig. 3. This detector reacts to a magnetic field crossing 107" the coil 10 set at the said low-frequency, e.g. 13.56MHz, and generates an input that is detected as an interrupt by the state machine of the active tag 1. This simple low-frequency detector allows the tag 1 to be placed in a deep sleep mode with the only current consumption of less than 200nA requiring only the activation of the trigger to switch back to the active mode. The exact working principle of the before mentioned peak-detector with the Schottky diodes is disclosed in EP 1 645 994 A1 [4]. The magnetic field crossing the coil 10 is typically from a close contact reader according to ISO 14443 or ISO 15693.

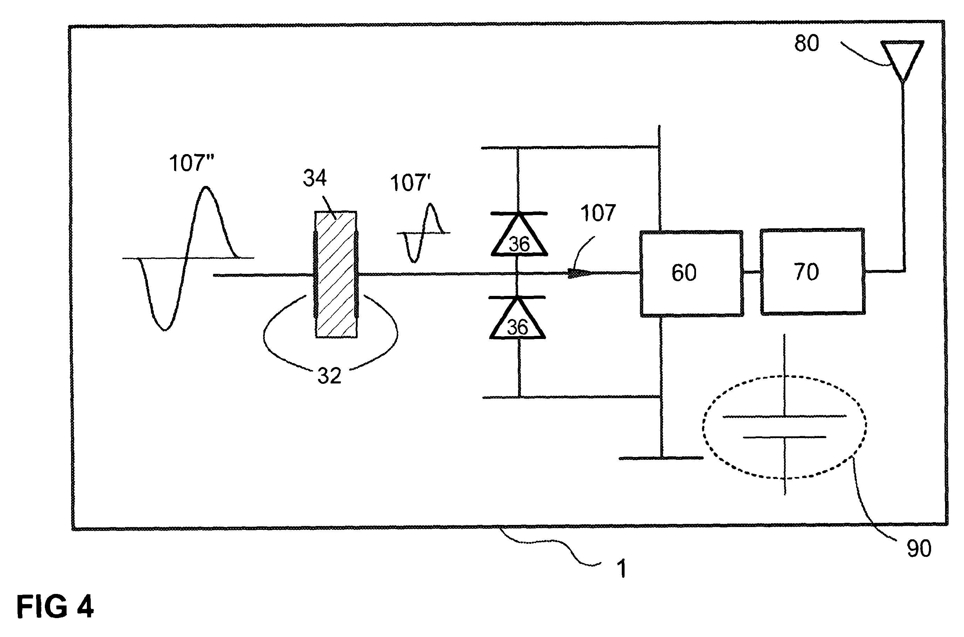

Fig 4 shows an embodiment of the invention in which a capacitive coupling is used. It has to be noted that Fig. 4 shows a schematic view, but not a constructive view of this embodiment. This capacitive coupling can be done simply between both faces of the active tag 1. In this case the triggering pulse 107'' would be transferred between an outside plate from the trigger, to a permanent inside plate fitted on the active tag 1. The detector is formed by two plates 32 and a plastic case 34. Since by capacitive coupling a relatively considerable amount of energy, even an attenuated triggering pulse 107', may be transmitted limiter diodes 36 are placed in order to protect the microcontroller 60; see in a qualitative manner the pulses 107'', 107' in Fig 4.

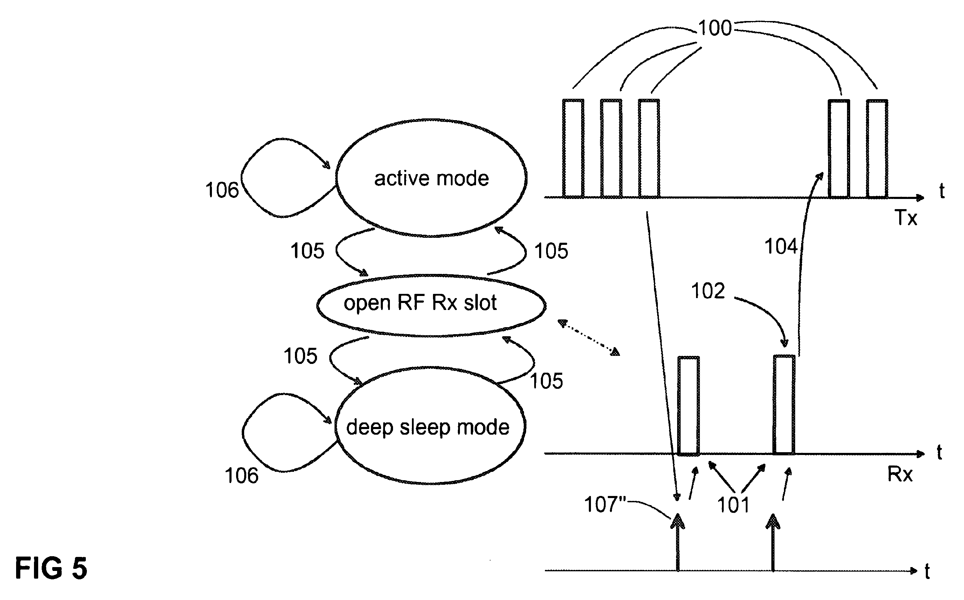

The working principle according to Fig. 5 is applicable for the arrangement in Fig 3 and the embodiment in Fig 4. In case of the Fig 3 arrangement the low frequency detector 20, 30, 40 activates the RF receiving path of the active tag 1. The RF receiving path of the active tag 1 is then powered up during a very short period of time, long enough to receive an incoming message 102 as depicted in Fig. 5. The incoming message 102 that follows the low-frequency activation 107" is sent when the listening window 101 is activated. It consists of an RF instruction 102, intrinsically safe, that instructs the active tag 1 to behave in the way requested, typically wake-up from the deep sleep mode. This wake-up command 102 can be used for instance to trace a plurality of tags 1. The RF instruction 102 may also request the tag 1 to switch to a different interval of beaconing time, or to perform some internal checks to retrieve the different status of operation of the tag 1 and send them on the RF link. May the tag 1 be fitted with a sensing and logging unit, the RF instruction 102 may also request the tag 1 to dump the data from the memory. As described above an instruction regarding the operation of the tag is also called a configuration command 102.

The message flow according to Fig. 5 may additionally contain:

the RF activation message 102 may be addressed specifically to a tag 1;

the RF activation message 102 may be broadcasted, therefore it does not require the prior knowledge of the specific address of the tag 1;

the RF activation message 102 instructs the tag 1 to provide its Identity ID on a RF specific channel, for registration purpose;

the RF activation message 102 instructs the tag 1 to change the way it operates, from Read Only to Read Write;

where the RF activation message 102 instructs the tag to change the way it operates, Read Write to Read Only;

the RF activation message 102 instructs the tag 1 to change the way it operates, like to switch to a different interval of transmission;

the RF activation message 102 instructs the tag 1 to change the way it operates, like to provide a single traceability instruction;

the RF activation message 102 instructs the tag 1 to dump the content of its memory;

the RF activation message 102 can be broadcasted the same instruction to a plurality of tags 1 receiving the wake-up pulse 107.

The before mentioned RF activation messages 102 instructing the tag 1 in a specific way are also called «configuration commands» 102. Even a configuration command allows at least a temporarily switching to a active mode. So such a configuration command can be regarded as a special embodiment of a wake-up command.

The operation according to the invention provides a very safe way to switch the active tag 1 from the active mode, back to a deep sleep mode without any significant energy consumption. In case of accidental LF activation by a parasitic spike, the active tag 1 shall activate its receiving RF section and wait for a valid incoming RF message 102. In case this message 102 is not detected, the tag 1 falls back into the deep sleep mode in which it was previously. This one time wake-up of the receiving section of the RF is not relevant to the overall energy consumption of the active tag.

### List of reference signs, glossary

- 1: RFID tag,
- 10: Coil, low-frequency magnetic field detector
- 20: Capacitor
- 30: Shottky diode
- 32: Capacitor Plate
- 34: Plastic case
- 36: Limiter diode
- 40: Resistor
- 50: Resistor
- 60: Microcontroller, state machine
- 70: Transceiver, transmitter
- 80: Antenna
- 90: Battery
- 100: Telegram transmission by the tag
- 101: Periodically activation of the receiving section of a tag; RF listen window
- 102: An incoming RF message from a reader instructs to revert to active mode: Wake-up command; RF instruction, RF activation message; configuration command
- 103: Switch from active mode to deep sleep mode
- 104: Revert back from mute mode to active mode
- 105: LF trigger received
- 106: Monitor LF trigger
- 107: Wake up pulse, wake up information
- 107": Magnetic field, energy pulse, triggering pulse; LF Trigger
- 107': Attenuated triggering pulse in case of a capacitive coupling
- IATA: International Air Transport Association
- LF: Low Frequency, Low frequency in the context with RFID technology, frequency operating magnetic transfer of energy at frequencies below 30MHz, typically 125kHz or 13.56MHz.
- RF: Radio Frequency, any frequency above 300 MHz
- Rx: Receiving section
- Tax: Transmitting section

### List of cited documents

[1] US 6,765,484 B2 «Method and apparatus for supplying commands to a tag» Assignee: Save Technology, Inc, Sunnyvale, CA (US) Prior Publication Data: Aug. 21, 2003.
[2] US 7,446,658 B2 «Identification (ID) system and method of operation thereof» Assignee: Avado Technologies General IOP, Singapore Prior Publication Data: Sep. 13, 2007.
[3] WO 2007/101080 A2 «Methods and apparatus for switching a transponder to an active state, and asset management systems employing same » Applicant: University of Pittsburgh-of the commonwealth system of higher education International Publication Date: 7 September 2007.
[4] EP 1 645 994 A1
   «Transpondeur passif comprenant un élévateur de tension»
   Applicant: EM Microelectronic-Marin SA CH - 2074 Marin
   Publication date: 12 April 2006.
[5] EP 1 210 693 B1 «METHOD AND SYSTEM FOR REGISTERING TICKETS» Applicant: Siemens Transit Telematic Systems AG 8212 Neuhausen (CH) Publication date: 22 March 2001
[6] US 2003/0104848 A1
   «RFID device, system and method of operation including a hybrid backscatter-based RFID tag protocol compatible with RFID, Bluetooth and/or IEEE 802.11X infrastructure» Raj Bridgeglall, Mount Sinai, NY (US)
[7] US 2005/0150949 A1
   «Low power wireless display tag systems and methods» Altierre Corporation, Monte Sereno, CA
[8] WO 2007/101080 A2
   «Methods and apparatus for switching a transponder to an active state, and asset managements systems employing same» University of Pittsburgh-of the common-wealth system of higher education, Pittsburgh, Pennsylvania US
[9] US 2005/0093374 A1
   «Controlling power supplied to a circuit using an externally applied magnetic field» Connors Timothy, Sunnyvale, CA
[10] WO 2008/104567 A1
   «An electronic payment, information, or ID card with a deformation sensing means» CARDLAB ApS, Copenhagen

## Claims

1. A method for switching an active RFID tag (1) from a deep sleep mode into an active mode, the tag (1) comprising
- a microcontroller (60);
- a transmitter (70) connected with an antenna (80);
- a battery (90);
the tag (1) being fitted with a detector (32, 34) for receiving an external energy pulse (107") and the detector (32, 34) being formed by two plates (32) wherein one plate (32) of said plates (32) is arranged outside and the other plate (32) is arranged inside the tag (1) and wherein both plates are separated by a plastic case (34) and form a capacitive coupling, the method comprising the steps of:
- receiving the external energy pulse by means of the capacitive coupling;
- providing a wake-up pulse (107) to the micro-controller (60), in response to the wake-up pulse (107) opening a brief radio frequency listen window (101) and receiving a message (102) containing an instruction to switch the tag (1) to the active mode.

2. A method for switching an active RFID tag (1) according to claim 1;
wherein
the message (102) instructs the tag (1) to provide its identity on a RF specific channel for registration purposes.

3. A method for switching an active RFID tag (1) according to one of the preceding claims;
wherein
the message (102) is broadcasted to a plurality of tags (1).

4. An active RFID tag (1) comprising
- a microcontroller (60);
- a transmitter (70) connected with an antenna (80);
- a battery (90);
the tag (1) being fitted with a detector (32, 34) for receiving an external energy pulse (107'') providing a wake-up pulse (107) to the micro-controller (60), the wake-up pulse (107) having the effect of opening a brief radio frequency listen window (101) allowing the tag (1) to receive a message (102) containing an instruction to switch the tag (1) to the active mode,
**characterized by**
the detector (32, 34) being formed by two plates (32), wherein one plate (32) of said plates is arranged outside and the other plate (32) is arranged inside the tag (1) and wherein both plates are separated by a plastic case (34) and form a capacitive coupling, the detector (32, 34) being arranged to receive the external energy pulse by means of capacitive coupling.

## Patentansprüche

1. Verfahren zum Umschalten eines aktiven RFID-Etiketts (1) aus einem Ruhemodus (Deep Sleep Mode) in einen aktiven Modus, wobei das Etikett (1) Folgendes umfasst:
- einen Mikrocontroller (60),
- einen Sender (70), der mit einer Antenne (80) verbunden ist,
- eine Batterie (90),
wobei das Etikett (1) mit einem Detektor (32, 34) zum Empfangen eines externen Energieimpulses (107" ) ausgerüstet ist und der Detektor (32, 34) von zwei Platten (32) gebildet wird, wobei eine (32) dieser Platten (32) außen am Etikett (1) und die andere Platte (32) innen im Etikett (1) angeordnet ist und wobei beide Platten durch ein Kunststoffgehäuse (34) voneinander getrennt sind und eine kapazitive Kopplung bilden, wobei das Verfahren folgende Schritte umfasst:
- Empfangen des externen Energieimpulses mit Hilfe der kapazitiven Kopplung,
- Bereitstellen eines Aktivierungsimpulses (107) für den Mikrocontroller (60), Öffnen eines kurzen Hochfrequenzabhörfensters (101) als Reaktion auf den Aktivierungsimpuls (107) und Empfangen einer Nachricht (102), die eine Anweisung enthält, das Etikett (1) in den aktiven Modus umzuschalten.

2. Verfahren zum Umschalten eines RFID-Etiketts (1) nach Anspruch 1,
bei dem
die Nachricht (102) das Etikett (1) anweist, zu Registrierungszwecken seine Identität auf einem speziellen Hochfrequenzkanal anzugeben.

3. Verfahren zum Umschalten eines RFID-Etiketts (1) nach einem der vorhergehenden Ansprüche,
bei dem
die Nachricht (102) an mehrere Etiketten (1) ausgestrahlt wird.

4. Aktives RFID-Etikett (1), das Folgendes umfasst:
- einen Mikrocontroller (60),
- einen Sender (70), der mit einer Antenne (80) verbunden ist,
- eine Batterie (90),
wobei das Etikett (1) mit einem Detektor (32, 34) zum Empfangen eines externen Energieimpulses (107") ausgerüstet ist, der einen Aktivierungsimpuls (107) für den Mikrocontroller (60) bereitstellt, wobei der Aktivierungsimpuls (107) bewirkt, dass sich ein kurzes Hochfrequenzabhörfenster (101) öffnet, das dem Etikett (1) ermöglicht, eine Nachricht (102) zu empfangen, die eine Anweisung enthält, das Etikett (1) in den aktiven Modus umzuschalten, **dadurch gekennzeichnet, dass**
der Detektor (32, 34) von zwei Platten (32) gebildet wird, wobei eine (32) dieser Platten außen am Etikett (1) und die andere Platte (32) innen im Etikett (1) angeordnet ist und wobei beide Platten durch ein Kunststoffgehäuse (34) voneinander getrennt sind und eine kapazitive Kopplung bilden, wobei der Detektor (32, 34) so angeordnet ist, dass er den externen Energieimpuls mit Hilfe der kapazitiven Kopplung empfängt.

## Revendications

1. Procédé de commutation d'une étiquette (1) RFID active d'un mode de sommeil profond à un mode actif, l'étiquette ( 1 ) comprenant
- un microcontrôleur ( 60 ) ;
- un émetteur ( 70 ) relié à une antenne ( 80 ) ;
- une batterie ( 90 ) ;
l'étiquette ( 1 ) étant pourvue d'un détecteur ( 32, 34 ) de réception d'une impulsion ( 107" ) extérieure d'énergie et le détecteur ( 32, 34 ) étant formé de deux plaques ( 32 ), l'une des plaques ( 32 ) étant disposée à l'extérieur et l'autre plaque ( 32 ) étant disposée à l'intérieur de l'étiquette
( 1 ), et les deux plaques étant séparées par un boîtier ( 34 ) en matière plastique et formant un couplage capacitif, le procédé comprenant les stades dans lesquels :
- on reçoit l'impulsion extérieure d'énergie au moyen du couplage capacitif ;
- on fournit une impulsion ( 107 ) de réveil au microcontrôleur ( 60 ), en réaction à l'impulsion ( 107 ) de réveil on ouvre une fenêtre ( 101 ) d'écoute brève en radiofréquence et on reçoit un message ( 102 ) contenant une instruction pour commuter l'étiquette ( 1 ) au mode actif.

2. Procédé de commutation d'une étiquette ( 1 ) RFID active suivant la revendication 1 ;
dans lequel
le message ( 102 ) instruit l'étiquette ( 1 ) de donner son identité sur un canal RF spécifique à des fins d'enregistrement.

3. Procédé de commutation d'une étiquette ( 1 ) RFID active suivant l'une des revendications précédentes ;
dans lequel
le message ( 102 ) est diffusé vers une pluralité d'étiquettes ( 1 ).

4. Etiquette ( 1 ) RFID active comprenant
- un microcontrôleur ( 60 ) ;
- un émetteur ( 70 ) connecté à une antenne ( 80 ) ;
- une batterie ( 90 ) ;
l'étiquette ( 1 ) étant pourvue d'un détecteur ( 32, 34 ) de réception d'une impulsion ( 107" ) extérieure d'énergie fournissant une impulsion ( 107 ) de réveil au microcontrôleur ( 60 ), l'impulsion ( 107 ) de réveil ayant l'effet d'ouvrir une fenêtre ( 101 ) d'écoute brève en fréquence radio permettant à l'étiquette ( 1 ) de recevoir un message ( 102 ) contenant une instruction de commutation de l'étiquette ( 1 ) au mode actif,
**caractérisée en ce que**
le détecteur ( 32, 34 ) est formé de deux plaques ( 32 ), l'une des plaques ( 32 ) étant disposée à l'extérieur et l'autre plaque ( 32 ) étant disposée à l'intérieur de l'étiquette ( 1 ), et les deux plaques étant séparées par un boîtier ( 34 ) en matière plastique et formant un couplage capacitif, le détecteur ( 32, 34 ) étant conçu pour recevoir l'impulsion extérieure d'énergie au moyen d'un couplage capacitif.
